# EUROPEAN PATENT SPECIFICATION

(11) **EP 4 027 770 B1**
(45) Date of publication and mention of the grant of the patent: **25.09.2024**
(21) Application number: 20719638.7
(22) Date of filing: 16.04.2020
(51) Int. Cl.: A01D 41/14, A01D 41/127

(54) **HARVESTING HEADERS HAVING LEADING SENSORS, AGRICULTURAL MACHINES CARRYING SUCH HEADERS, AND RELATED METHODS**
ERNTEVORSATZ MIT HÖHENSENSOREN, LANDWIRTSCHAFTLICHE MASCHINEN MIT ERNTEVORSATZ, SOWIE METHODEN DIESBEZÜGLICH
TÊTES DE RÉCOLTE AYANT DES CAPTEURS DE HAUTEUR, MACHINES AGRICOLES PORTANT DE TELLES TÊTES ET PROCÉDÉS ASSOCIÉS

(30) Priority: 13.09.2019 GB 201913215
(43) Date of publication of application: 20.07.2022
(73) Proprietor: AGCO International GmbH, 8212 Neuhausen am Rheinfall (CH)
(72) Inventor: RACCHELLA, Fabio, 36042 Breganze (IT); BASSO, Paolo, 36042 Breganze (IT)
(74) Representative: AGCO Intellectual Property Department
(86) International application number: PCT/EP2020/060767
(87) International publication number: WO 2021/047799

(56) References cited:
- EP-A1- 2 384 613
- EP-A1- 2 695 511
- EP-A1- 2 862 432
- EP-A1- 3 516 942
- US-A- 4 141 200
- US-A- 5 794 421
- US-A1- 2018 070 531

## Description

### FIELD

This disclosure relates to harvesting headers for use with self-propelled crop-harvesting machines, and particularly to headers having sensors.

### BACKGROUND

Self-propelled agricultural harvesters are well known and include, by way of example, combine harvesters, windrowers, and forage harvesters, all of which typically include a frame or chassis, an operator cab, an engine, and ground-engaging wheels or tracks. A cutting or pick-up header is often carried by the harvester, the header typically being considerably wider than the harvester and mounted to the front side of a feederhouse.

Crop material collected by the header is conveyed into the feederhouse before being conveyed in a generally rearward direction to crop-processing apparatus. In the case of a combine harvester, the processing apparatus serves to thresh the crop material and separate grain therefrom, whereas, in the case of a forage harvester or windrower, the crop material is typically passed through conditioning rollers.

Headers typically include a pair of crop dividers on opposite ends of a crop-gathering mechanism. The dividers divide and lift the crop, and guide it inwardly toward the crop-gathering mechanism, where it may be harvested by one or more harvesting tools, such as a set of oscillating blades. Dividers may carry divider points, which may extend forward or upward from the front of the divider. Harvesting headers may contact the ground in certain terrain (*e.g.,* hilly, rough, *etc.).* Contact between the header and the ground may cause damage to the header and/or the ground.

US-4,141,200 discloses a tomato harvester with an automatic header adjustment system having a tined control wheel mounted forward of a leading edge. A control mechanism is actuated by relative vertical movements of the control wheel for raising and lowering the leading edge of the elevator in response to ground surface irregularities sensed by the wheel.

### BRIEF SUMMARY

A harvesting header for use with a crop-harvesting machine includes a header frame structured to be coupled to a front of the crop-harvesting machine, at least one harvesting tool carried by the header frame and configured to cut crop material, a rotatable arm coupled to the header frame at a pivot point and extending forward of the at least one harvesting tool when the harvesting header is used to cut crop material, a wheel coupled to the rotatable arm and configured to roll along a soil surface leading the at least one harvesting tool when the harvesting header is used to cut crop material in an agricultural field, and a sensor coupled to the header frame at the pivot point and configured to provide a signal to the crop-harvesting machine, the signal correlated to the angle of the rotatable arm with respect to the header frame.

An agricultural harvester includes a chassis, a feederhouse carried by the chassis, a processing system carried by the chassis and structured to receive crop material from the feederhouse, a grain bin carried by the chassis and structured to receive processed grain from the processing system, a harvesting header coupled to the feederhouse and configured to cut grain, and a control system configured to adjust a position of the harvesting header relative to the agricultural harvester.

A method of operating an agricultural harvester includes propelling the agricultural harvester through an agricultural field, sensing a contour of a soil surface leading at least one harvesting tool carried by a harvesting header, and adjusting a height of the harvesting header based on the sensed contour.

### BRIEF DESCRIPTION OF THE DRAWINGS

While the specification concludes with claims particularly pointing out and distinctly claiming what are regarded as embodiments of the present disclosure, various features and advantages of embodiments of the disclosure may be more readily ascertained from the following description of example embodiments of the disclosure when read in conjunction with the accompanying drawings, in which:
FIG. 1 is a simplified front perspective view of an example combine harvester;
FIG. 2 illustrates a header that may be used with the combine harvester of FIG. 1;
FIG. 3 is a simplified side view of an agricultural harvester that includes the harvesting header of FIG. 2 coupled to the combine harvester of FIG. 1;
FIG. 4 is a simplified side view showing the harvesting header of FIG. 3 in more detail;
FIG. 5 is a simplified side view illustrating the agricultural harvester of FIG. 3 encountering a change in topography;
FIG. 6 is a simplified side view illustrating the agricultural harvester of FIG. 3 adjusting the harvesting header in response to a change in topography;
FIG. 7 illustrates another header which is not part of the present invention, this header may be used with the combine harvester of FIG. 1;
FIG. 8 is a simplified flow chart illustrating a method of operating an agricultural harvester; and
FIG. 9 illustrates an example computer-readable storage medium comprising processor-executable instructions configured to embody one or more of the methods of operating an agricultural harvester, such as the method illustrated in FIG. 8.

### DETAILED DESCRIPTION

The illustrations presented herein are not actual views of any header or portion thereof, but are merely idealized representations that are employed to describe example embodiments of the present disclosure. Additionally, elements common between figures may retain the same numerical designation.

The following description provides specific details of embodiments of the present disclosure in order to provide a thorough description thereof. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. Also note, the drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (*e.g.,* it includes the degree of error associated with measurement of the given parameter).

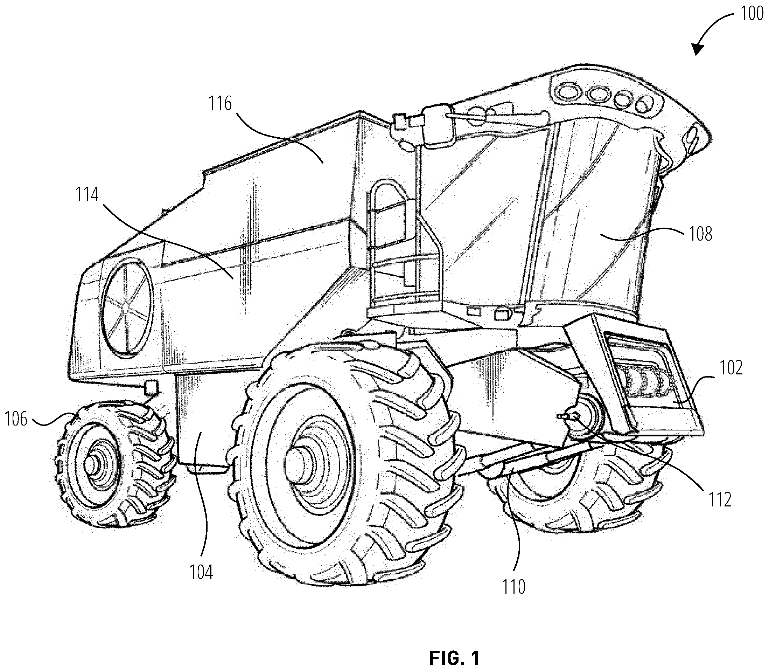

FIG. 1 illustrates an example agricultural harvester embodied as a combine harvester 100. In the context of the present disclosure, the example combine harvester 100 is merely illustrative, and other machines and/or implements with like functionality may deploy certain embodiments disclosed herein, such as windrowers, forage harvesters, *etc.* The example combine harvester 100 is shown in FIG. 1 without a header attached, and includes a feederhouse 102 carried by a chassis 104 supported by wheels 106. An operator cab 108 is mounted to the chassis 104. In some embodiments, other or additional forms of travel may be used, such as tracks. Hydraulic cylinders 110 are shown affixed to the underside of the feederhouse 102 on one end and to the chassis 104 on the other end. The feederhouse 102 may move (*e.g.,* up and down, pitch, tilt, *etc.)* based on actuation of the hydraulic cylinders 110, which causes a detachably coupled header to also be raised, lowered, pitched, and/or tilted. A rotating shaft 112 may be configured to provide mechanical power to a header during operation of the combine harvester 100. The rotating shaft 112 may be configured to operate at various speeds, as described in, for example, U.S. Patent 9,434,252, "Power Takeoff Drive System for a Vehicle," issued September 6, 2016.

In general, the combine harvester 100 cuts crop materials (*e.g.,* using the header), and the cut crop materials are delivered to the front end of the feederhouse assembly 200. Such crop materials are moved upwardly and rearwardly within and beyond the feederhouse 102 (*e.g.,* by a conveyer) until reaching a processing system 114 that includes a thresher rotor. In one embodiment, the thresher rotor may comprise a single, transverse rotor, such as that found in a Gleaner^{®} Super Series Combine by AGCO. Other designs may be used, such as axial-based, twin rotor, or hybrid designs. The thresher rotor processes the crop materials in known manner and passes a portion of the crop material (*e.g.,* heavier chaff, corn stalks, *etc.)* toward the rear of the combine harvester 100 and another portion (*e.g.,* grain and possibly light chaff) through a cleaning process. In the processing system 114, the crop materials undergo threshing and separating operations. In other words, the crop materials are threshed and separated by the thresher rotor operating in cooperation with well-known foraminous processing members in the form of threshing concave assemblies and separator grate assemblies, with the grain (and possibly light chaff) escaping through the concave assemblies and the grate assemblies and to a cleaning system beneath the processor to facilitate the cleaning of the heavier crop material. Bulkier stalk and leaf materials are generally retained by the concave assemblies and the grate assemblies and are discharged out from the processing system 114 and ultimately out of the rear of the combine harvester 100. The cleaned grain that drops to the bottom of the cleaning system is delivered by a conveying mechanism that transports the grain to an elevator, which conveys the grain to a grain bin 116 located at the top of the combine harvester 100. Any remaining chaff and partially or unthreshed grain is recirculated through the processing system 114 via a tailings return conveying mechanism. Because combine processing is known to those having ordinary skill in the art, further discussion thereof is omitted here for brevity. In embodiments in which the agricultural harvester is a windrower or forage harvester, the processing system 114 may include conditioning rollers rather than separation devices.

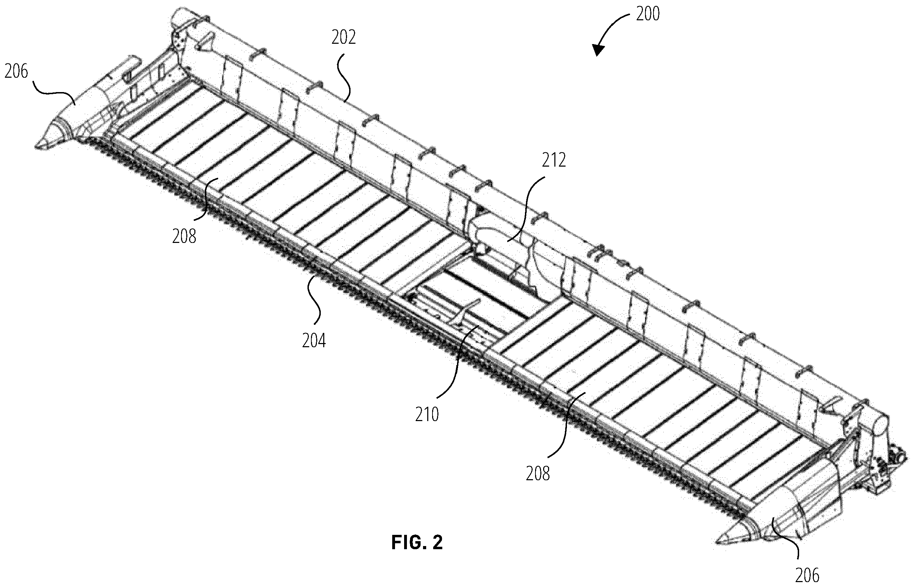

FIG. 2 is a simplified view of a header 200 that may be attached to the feederhouse 102 of the combine harvester 100 (FIG. 1) and used to harvest a crop. The header 200 includes a header frame 202, at least one harvesting tool 204, and dividers 206 at either end of the header 200. The harvesting tool 204 is depicted as an oscillating blade, but may be any other tool used for harvesting crops that come into contact with the harvesting tool 204. The dividers 206 may serve to define boundaries between crop material being harvested and standing crop (typically, material to be harvested in a subsequent pass through the agricultural field) by directing crop material on one side of the divider 206 toward the harvesting tool 204 and crop material on the other side of the divider 206 away from the harvesting tool 204.

The header 200 may also include side drapers 208, a center draper 210, and/or a collecting auger 212 that together may transport cut crop material toward the feederhouse 102 of the combine harvester 100. Headers are described in more detail in, for example, U.S. Patent 7,886,511, "Draper Head with Flexible Cutterbar Having Rigid Center Section," issued February 15, 2011; U.S. Patent 10,194,588, "Corn header Configured to Reduce Kernel Losses," issued February 5, 2019; and U.S. Patent 8,857,143, "Frame for harvesting header with Continuous Section," issued October 14, 2014.

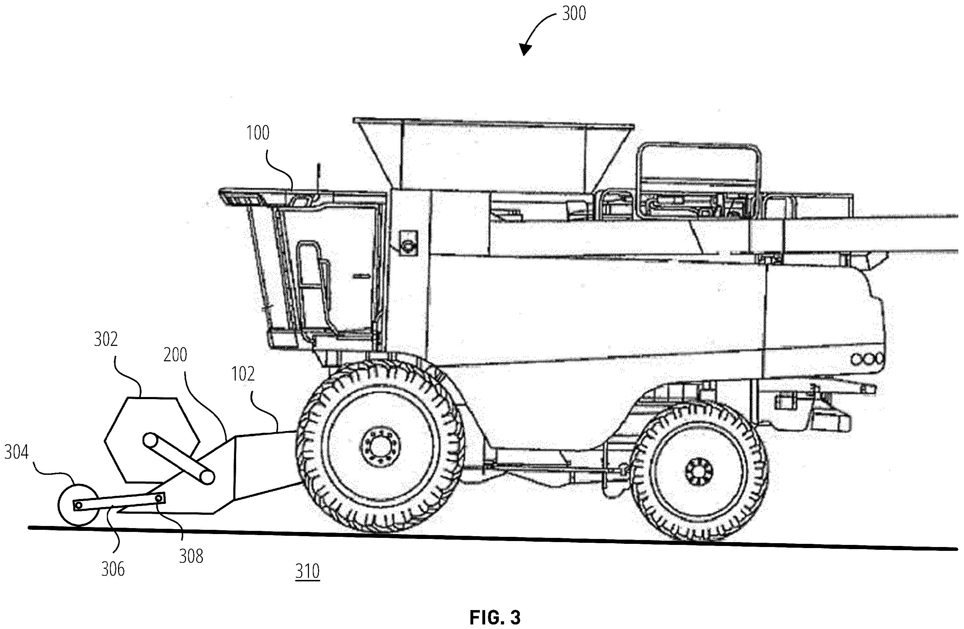

FIG. 3 is a simplified side view of an agricultural harvester 300 that includes the header 200 (FIG. 2) coupled to the combine harvester 100 (FIG. 1). In addition to those elements illustrated in FIG. 2, the header 200 may also include reel 302 configured to direct crop material toward the harvesting tool 204 (FIG. 2) and a wheel 304 configured to lead the harvesting tool 204 when the header 200 is carried by the combine harvester 100 through an agricultural field.

The wheel 304 may be connected to an arm 306 and operable to rotate along a soil surface ahead of the harvesting tool 204. The arm 306 may in turn be attached to the header 200 at a pivot point 308. The arm 306 is configured to rotate about the pivot point 308, so that the wheel 304 can remain in contact with the ground 310 (*i.e.,* the soil surface) even when the ground 310 is not flat.

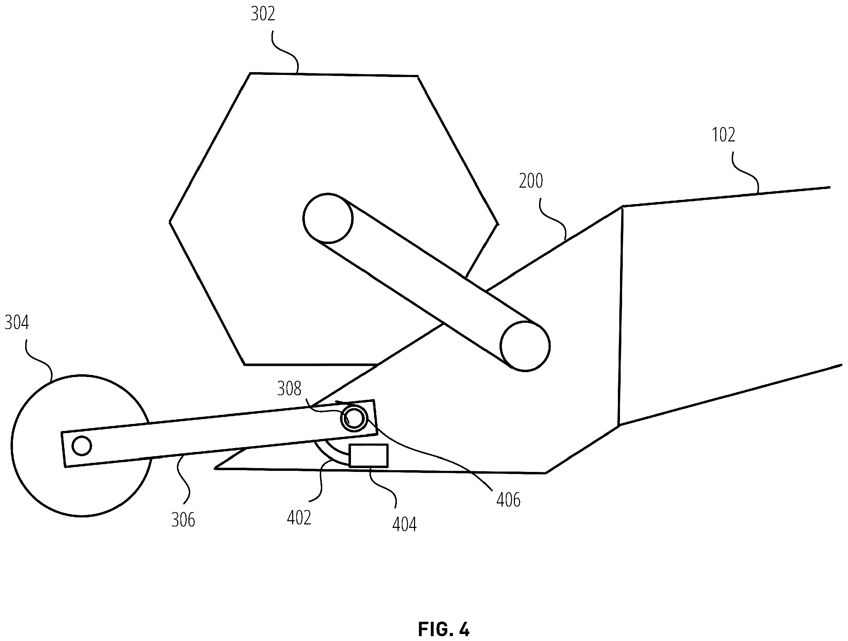

FIG. 4 shows the header 200 in more detail. As shown, an angle sensor 402 may be coupled to the arm 306 and configured to detect an angular orientation of the arm 306. The angle sensor 402 may include a transmitter 404 configured to generate a signal correlated to the angular orientation of the arm 306 or the minimum distance from the ground 310 to the harvesting tool 204. The signal may be transmitted to a control system associated with the combine harvester 100 (*e.g.,* a computer having a user interface in the operator cab 108).

The arm 306 may be pushed downward against the ground 310 (FIG. 3) by a biasing member 406, such as a spring. For example, the biasing member 406 may be a torsion spring, a coil spring, an air spring, *etc.* In certain embodiments, the biasing member 406 may be omitted, and the weight of the wheel 304 and arm 306 may provide downward force to keep the wheel 304 in contact with the ground 310.

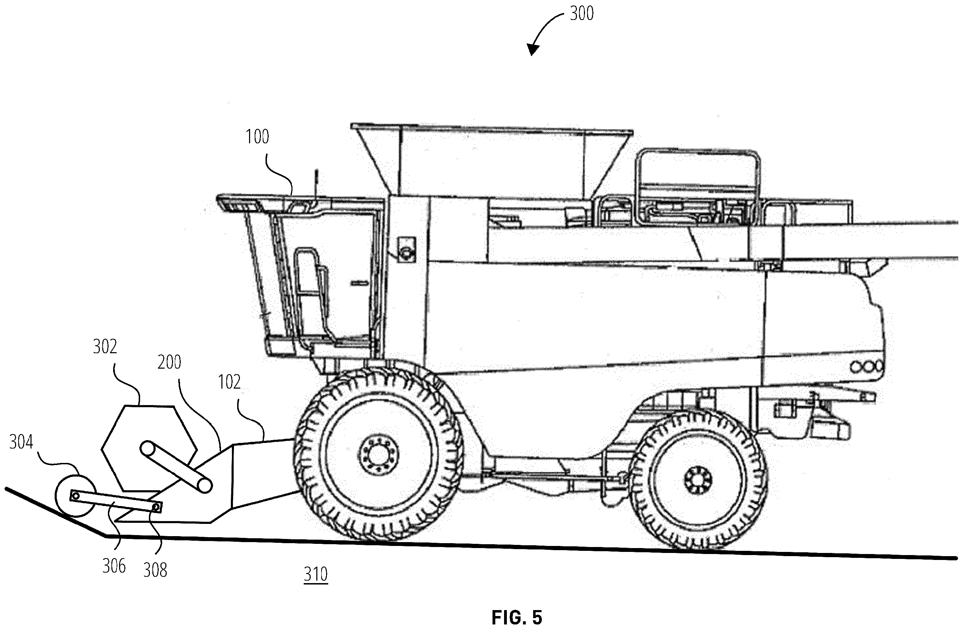

FIG. 5 is a simplified side view illustrating the agricultural harvester 300 encountering a change in topography (depicted as a hill, a ridge, *etc.).* As shown, the wheel 304 reaches the hill ahead of the harvesting tool 204 (FIG. 2). The arm 306 rotates upward, pushed by the wheel 304. The angle sensor 402 (FIG. 4) detects a change in the angle of the arm 306, and the transmitter 404 (FIG. 4) transmits a signal to the control system. The control system may then adjust a height of the header 200 based on the detected topography that the harvesting tool 204 is about to encounter.

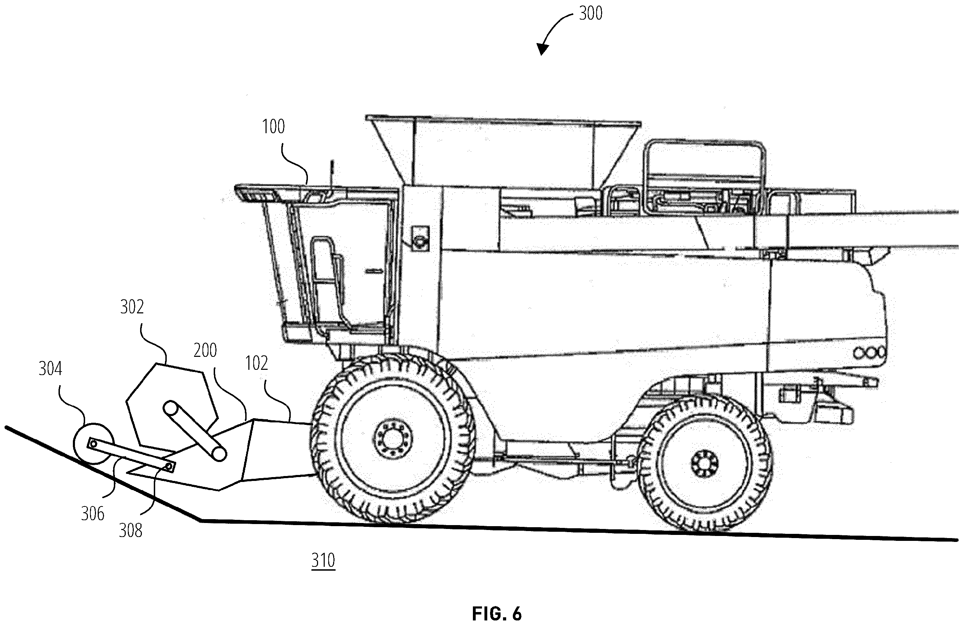

For example, and as shown in FIG. 6, the control system may cause the feederhouse 102 to raise the header 200 to match the contour of the ground 310, such that the harvesting tool 204 does not touch the ground 310. The wheel 304 may enable the operator to set the desired minimum distance from the harvesting tool 204 to the ground 310 lower than is desired for conventional harvesting headers because the wheel 304 (in combination with the control system) may protect the harvesting tool 204 from damage. That is, by moving the header 200 when a change in the elevation of the ground 310 is detected, the agricultural harvester 300 may avoid contacting the harvesting tool 204 with the ground 310. Furthermore, by automating the process of adjusting the height of the header 200, the operator may harvest an agricultural field faster and more safely than with conventional equipment, because adjustments may be made while the operator remains in the operator cab 108.

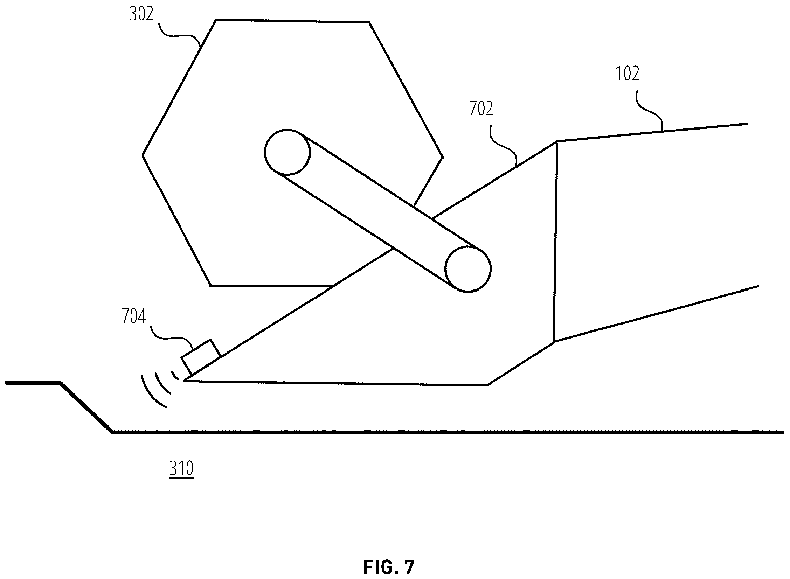

FIG. 7 is a simplified side view showing a header 702 having a non-contact sensor 704. The non-contact sensor 704 may be, for example, a transducer configured to transmit and receive energy to and from the ground 310. For example, the non-contact sensor 704 may transmit and receive ultrasonic waves, electromagnetic radiation (*e.g.*, a laser), *etc.* The received energy may be reflected from the surface of the ground 310. The non-contact sensor 704 may generate a signal corresponding to a distance from the non-contact sensor 704 to the ground 310, and may send the signal to a control system associated with the combine harvester 100, as discussed above. Non-contact sensors are described in more detail in, for example, U.S. Patent 9,750,174, "Agricultural trench depth sensing systems, methods, and apparatus," issued September 5, 2017; U.S. Patent Application Publication 2019/0075710, "Seed Trench Depth Detection Systems," published March 14, 2019; and U.S. Patent Application Publication 2019/0014714, "Agricultural Trench Depth Systems, Methods, and Apparatus," published January 17, 2019.

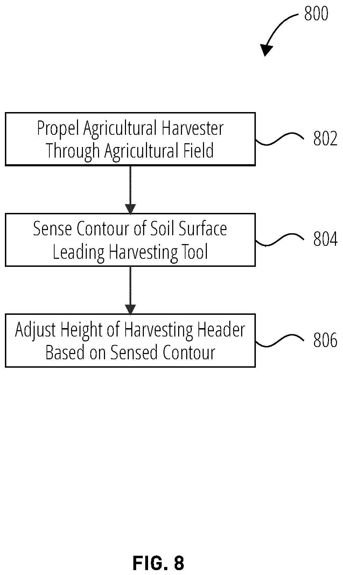

FIG. 8 is a simplified flow chart illustrating a method 800 in which the header 200 or header 702 may be used for harvesting an agricultural field. In block 802, the agricultural harvester is propelled through an agricultural field.

In block 804, a contour of a soil surface leading the at least one harvesting tool is sensed. For example, the contour may be sensed by measuring an angle at which an arm leading the harvesting tool is oriented on a header frame. In other examples not according to the invention, the contour may be sensed with a non-contact sensor by transmitting energy toward the soil surface and receiving energy reflected by the soil surface.

In block 806, a height of the harvesting header is adjusted based on the sensed contour. The height may be adjusted to avoid contacting the soil surface with the harvesting tool, or to maintain a selected height of the harvesting tool with respect to the soil surface.

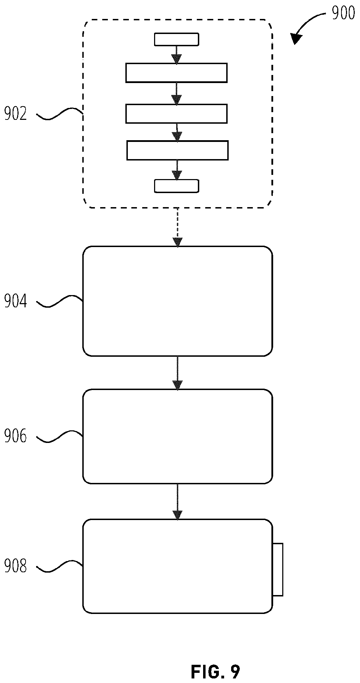

Still other embodiments involve a computer-readable storage medium (*e.g.*, a non-transitory computer-readable storage medium) having processor-executable instructions configured to implement one or more of the techniques presented herein. An example computer-readable medium that may be devised is illustrated in FIG. 9, wherein an implementation 900 includes a computer-readable storage medium 902 (*e.g.,* a flash drive, CD-R, DVD-R, application-specific integrated circuit (ASIC), field-programmable gate array (FPGA), a platter of a hard disk drive, *etc.),* on which is computer-readable data 904. This computer-readable data 904 in turn includes a set of processor-executable instructions 906 configured to operate according to one or more of the principles set forth herein. In some embodiments, the processor-executable instructions 906 may be configured to cause a computer associated with the combine harvester 100 (FIG. 1) to perform operations 908 when executed via a processing unit, such as at least some of the example method 800 depicted in FIG. 8. In other embodiments, the processor-executable instructions 906 may be configured to implement a system, such as at least some of the example header 200 and combine harvester 100. Many such computer-readable media may be devised by those of ordinary skill in the art that are configured to operate in accordance with one or more of the techniques presented herein.

The sensors disclosed herein may be used to direct a control system to move the harvesting header to prevent contact with the ground and to keep the harvesting header at a selected height for harvesting. Typically, if a harvesting tool contacts the ground, the harvesting tool may be damaged. Furthermore, rocks and other debris can damage harvesting tools. To avoid these problems, the height of a conventional harvesting header may typically be set high enough to avoid ground contact and debris. However, this height may be greater than is ideal for certain crops. Thus, the sensors disclosed herein may enable the operator to set the height of the harvesting header lower than would be possible with conventional harvesting headers, yet the sensors may help avoid damage caused by terrain variations.

Though one sensor is depicted on a harvesting header, multiple sensors may be placed on a single harvesting header. For example, one sensor may be mounted to each divider 206 to provide contour information at two points. In some embodiments, additional sensors may be located on appropriate mounts between the dividers 206.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed. Further, embodiments of the disclosure have utility with different and various machine types and configurations.

## Claims

1. A harvesting header for use with a crop-harvesting machine, the harvesting header comprising:
a header frame (202) structured to be coupled to a front of the crop-harvesting machine;
at least one harvesting tool (204) carried by the header frame and configured to cut crop material;
a rotatable arm (306) coupled to the header frame (202) at a pivot point (308) and extending forward of the at least one harvesting tool (204) when the harvesting header is used to cut crop material;
a wheel (304) coupled to the rotatable arm (306) and configured to roll along a soil surface leading the at least one harvesting tool (204) when the harvesting header is used to cut crop material in an agricultural field; and
a sensor (402) coupled to the header frame (202) at the pivot point (308), **characterized in that** the sensor (402) is configured to provide a signal to the crop-harvesting machine, the signal correlated to the angle of the rotatable arm (306) with respect to the header frame (202).

2. An agricultural harvester, comprising:
a chassis (104);
a feederhouse (102) carried by the chassis (104);
a processing system (114) carried by the chassis (104) and structured to receive crop material from the feederhouse (102);
a grain bin (116) carried by the chassis (104) and structured to receive processed grain from the processing system (114);
a harvesting header according to claim 1 coupled to the feederhouse (102) and configured to cut grain; and
a control system configured to adjust a position of the harvesting header relative to the agricultural harvester based at least in part on the measured angle of the rotatable arm.

3. The agricultural harvester of claim 2, wherein the sensor (402) is configured to transmit a signal to the control system.

4. The agricultural harvester of claim 3, wherein the signal is correlated to a minimum distance from the harvesting header to the soil surface.

5. A method of operating an agricultural harvester, the method comprising:
propelling the agricultural harvester of claim 2 through an agricultural field;
sensing a contour of a soil surface leading the at least one harvesting tool; and
adjusting a height of the harvesting header based at least in part on the sensed contour.

6. The method of claim 5, wherein adjusting the height of the harvesting header comprises raising the harvesting header to avoid contacting the soil surface with the at least one harvesting tool.

7. The method of claim 5 or claim 6, wherein adjusting the height of the harvesting header comprises maintaining a selected height of the at least one harvesting tool with respect to the soil surface.

8. The method of claim 5 or claim 7, wherein sensing a contour of a soil surface leading the at least one harvesting tool comprises measuring an angle of an arm leading the at least one harvesting tool.

## Patentansprüche

1. Erntevorsatz zum Gebrauch mit einer Erntegut-Erntemaschine, wobei der Erntevorsatz aufweist:
einen Vorsatzrahmen (202) mit einer Struktur für eine Kopplung mit einer Front der Erntegut-Erntemaschine;
mindestens ein Erntewerkzeug (204), das von dem Vorsatzrahmen getragen ist und ausgebildet ist, Erntegutmaterial zu schneiden;
einen drehbaren Arm (306), der mit dem Vorsatzrahmen (202) an einem Schwenkpunkt (308) gekoppelt ist und sich von dem mindestens einen Erntewerkzeug (204) nach vorne erstreckt, wenn der Erntevorsatz verwendet wird, um Erntegutmaterial zu schneiden;
ein Rad (304), das mit dem drehbaren Arm (306) gekoppelt ist und ausgebildet ist, entlang einer das mindestens eine Erntewerkzeug (204) führenden Bodenfläche zu rollen, wenn der Erntevorsatz verwendet wird, um Erntegutmaterial auf einem landwirtschaftlichen Feld zu schneiden; und
einen Sensor (402), der an dem Schwenkpunkt (308) mit dem Erntevorsatz (202) gekoppelt ist, **dadurch gekennzeichnet, dass** der Sensor (402) ausgebildet ist, der Erntegut-Erntemaschine ein Signal bereitzustellen, wobei das Signal mit dem Winkel des drehbaren Arms (306) gegenüber dem Vorsatzrahmen (202) korreliert.

2. Landwirtschaftliche Erntemaschine, mit:
einem Chassis (104);
einem Fördergehäuse (102), das von dem Chassis (104) getragen wird;
einem Verarbeitungssystem (114), das von dem Chassis (104) getragen wird und eine Struktur zum Empfangen von Erntegutmaterial von dem Fördergehäuse (102) aufweist;
einem Kornspeicher (116), der von dem Chassis (104) getragen wird und eine Struktur zum Empfangen von verarbeitetem Korn von dem Verarbeitungssystem (114) aufweist;
einem Erntevorsatz nach Anspruch 1, der mit dem Fördergehäuse (102) gekoppelt ist und ausgebildet ist, Korn zu schneiden; und
einem Steuersystem, das ausgebildet ist, basierend zumindest teilweise auf dem gemessenen Winkel des drehbaren Arms eine Position des Erntevorsatzes relativ zu der landwirtschaftlichen Erntemaschine einzustellen.

3. Landwirtschaftliche Erntemaschine nach Anspruch 2, wobei der Sensor (402) ausgebildet ist, ein Signal an das Steuersystem zu übermitteln.

4. Landwirtschaftliche Erntemaschine nach Anspruch 3, wobei das Signal mit einer Mindestdistanz des Erntevorsatzes von der Bodenfläche korreliert.

5. Verfahren zum Betrieb einer landwirtschaftlichen Erntemaschine, wobei das Verfahren aufweist:
Antreiben oder Bewegen der landwirtschaftlichen Erntemaschine nach Anspruch 2 durch ein landwirtschaftliches Feld;
Sensieren einer Kontur einer Bodenfläche, die das mindestens eine Erntewerkzeug führt; und
Einstellen einer Höhe des Erntevorsatzes basierend zumindest teilweise auf der sensierten Kontur.

6. Verfahren nach Anspruch 5, wobei das Einstellen der Höhe des Erntevorsatzes ein Anheben des Erntevorsatzes aufweist, um ein Kontaktieren der Bodenfläche mit dem mindestens einen Erntewerkzeug zu verhindern.

7. Verfahren nach Anspruch 5 oder 6, wobei das Einstellen der Höhe des Erntevorsatzes ein Beibehalten einer ausgewählten Höhe des mindestens einen Erntewerkzeugs gegenüber der Bodenfläche aufweist.

8. Verfahren nach Anspruch 5 oder Anspruch 7, wobei das Sensieren einer Kontur einer Bodenfläche, die das mindestens eine Erntewerkzeug führt, ein Messen eines Winkels eines Arms aufweist, der das mindestens eine Erntewerkzeug führt.

## Revendications

1. Tête de moissonnage destinée à être utilisée avec une machine de moissonnage de culture, la tête de moissonnage comprenant :
un bâti de tête (202) structuré de manière à être couplé à une partie avant de la machine de moissonnage ;
au moins un outil de moissonnage (204) supporté par le bâti de tête et configuré de manière à couper le matériau à récolter ;
un bras tournant (306) couplé au bâti de tête (202) au niveau d'un point de pivot (308) et s'étendant à l'avant du au moins un outil de moissonnage (204) lorsque la tête de moissonnage est utilisée afin de couper le matériau à récolter ;
une roue (304) couplée au bras tournant (306) et configurée de manière rouler le long d'une surface du sol guidant le au moins un outil de moissonnage (204) lorsque la tête de moissonnage est utilisée afin de couper le matériau à récolter dans un champ agricole ; et
un capteur (402) couplé au bâti de tête (202) au niveau du point de pivot (308), **caractérisée en ce que** le capteur (402) est configuré de manière à fournir un signal à la machine de moissonnage, le signal étant corrélé à l'angle du bras tournant (306) par rapport au bâti de tête (202).

2. Moissonneuse agricole, comprenant :
un châssis (104) ;
un compartiment d'alimentation (102) supporté par le châssis (104) ;
un dispositif de traitement (114) supporté par le châssis (104) et structuré de manière à recevoir le matériau à récolter à partir du compartiment d'alimentation (102) ;
une trémie à grain (116) supportée par le châssis (104) et structurée de manière à recevoir le grain traité à partir du dispositif de traitement (114) ;
une tête de moissonnage selon la revendication 1, couplée au compartiment d'alimentation (102) et configurée de manière à couper le grain ; et
un dispositif de commande configuré de manière à ajuster une position de la tête de moissonnage par rapport à la moissonneuse agricole au moins en partie sur la base de l'angle mesuré du bras tournant.

3. Moissonneuse agricole selon la revendication 2, dans laquelle le capteur (402) est configuré de manière transmettre un signal au dispositif de commande.

4. Moissonneuse agricole selon la revendication 3, dans laquelle le signal est corrélé à une distance minimum à partir de la tête de moissonnage jusqu'à la surface du sol.

5. Procédé de commande d'une moissonneuse agricole, le procédé comprenant :
la propulsion de la moissonneuse agricole selon la revendication 2 à travers un champ agricole ;
la détection d'un profil d'une surface du sol guidant le au moins un outil de moissonnage ; et
le réglage d'une hauteur de la tête de moissonnage au moins en partie sur la base du profil détecté.

6. Procédé selon la revendication 5, dans lequel le réglage de la hauteur de la tête de moissonnage comprend le soulèvement de la tête de moissonnage afin d'éviter l'entrée en contact de la surface du sol avec le au moins un outil de moissonnage.

7. Procédé selon la revendication 5 ou 6, dans lequel le réglage de la hauteur de la tête de moissonnage comprend le maintien d'une hauteur sélectionnée du au moins un outil de moissonnage par rapport à la surface du sol.

8. Procédé selon la revendication 5 ou 7, dans lequel la détection d'un profil d'une surface du sol guidant le au moins un outil de moissonnage comprend la mesure d'un angle d'un bras guidant le au moins un outil de moissonnage.
